(19)

Europäisches
Patentamt
European
Patent Office
Office européen
des brevets

(11) **EP 1 883 072 A2**

(12) **EUROPEAN PATENT APPLICATION**

(43) Date of publication:
**30.01.2008 Bulletin 2008/05**

(51) Int Cl.:
*G11B 27/034* (2006.01)    *G11B 27/038* (2006.01)
*H04N 7/26* (2006.01)    *H04N 5/262* (2006.01)

(21) Application number: **07112985.2**

(22) Date of filing: **24.07.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **24.07.2006 JP 2006200336**

(71) Applicant: **NEC Electronics Corporation Kawasaki, Kanagawa 211-8668 (JP)**

(72) Inventor: **MATSUNAGA, Mitsuhiro, c/o NEC Electronics Corporation Kawasaki, Kanagawa 211-8668 (JP)**

(74) Representative: **Betten & Resch Patentanwälte Theatinerstrasse 8 80333 München (DE)**

(54) **Apparatus for editing data stream**

(57)    The editing point detecting unit detects editing points in audio frames. The edited frame generating unit generates edited frames. The silent frame generating unit generates silent audio frames. The frame substituting unit detects a point. The fade-out/fade-in processing unit fades out/in the sound.

The detection unit detects a video PTS at an editing point. The updated sequence information generating unit detects a sequence start code, and extracts and stores the sequence information. The updated sequence information creating unit extracts updated quantizer matrix information items. The sequence information inserting unit inserts the sequence information. The video editing unit connects the editing points. The stream generation unit generate an edited AV stream based on received video stream and audio stream.

FIG. 1

EP 1 883 072 A2

**Description**

FIELD OF THE INVENTION

The present invention relates to a method and an apparatus for editing data streams, each of which includes at least voice data, particularly to a method and an apparatus for editing compressed streams.

BACKGROUND OF THE INVENTION

With the progress of the digital technology in late years, there have been proposed some types of digital storage devices as the MPEG (Moving Picture Experts Group) for storing voice/video compressed streams on disks and reproducing these streams from the disks. Each of these devices that are already put into practical use. DVD (Digital Versatile Disk) recorders and hard disk recorders are among these devices. Each of these devices, upon storing a recorded stream on another disk, can divide the stream into some streams and select and connect only necessary streams among them. Usually, such editing is done based on video decoded images. However, because each of video and audio streams is recorded in time division multiplex, the lack of information sometimes occurs in these streams at the connection points. As a result, noise is generated.

JP-A No. 2005-117556 discloses a method and an apparatus for editing MPEG-2 transport streams by preventing occurrence of abnormal sounds and silence states that give the user a sense of discomfort when a dividing processing is applied to these streams. According to the editing method disclosed in JP-A No. 2005-117556, video signal data and audio signal data to be edited are recorded first on a random accessible recording medium, then multiplexed and compressed in time division multiplex with the MPEG-2 transporting method. For example, if there is any audio information in the middle of the video information at an editing position assumed as a boundary of video information data of a GOP (Group of Pictures) at the time of dividing/editing, a TS packet that includes video information is rewritten into a dummy TS data packet so that audio frame data stepping across each dividing position is configured perfectly in its stream before the dividing position. In addition, in the stream after the dividing position, the audio TS packets are overwritten with dummy TS packets until audio information TS packet data matching with the video information reproducing timing appears at the dividing position.

JP-ANo. 2004-336128 also discloses a video/audio signal editing method for solving a problem that an abnormal sound and/or silence state that gives the user a sense of discomfort occurs due to a decoding error that occurs at the time of reproducing of data of transport streams after a dividing process. The decoding error is caused by a difference between a timing of connecting video signals and a timing of connecting audio signals in an editing process. According to the editing method disclosed in JP-A No. 2004-336128, video and audio signal data to be handled are assumed to be multiplexed and compressed in time division multiplex with use of the MPEG-2 transport stream method. In this case, if there is a voice signal data transport packet that cannot satisfy a decoding unit data structure in any divided video signal data when video signal data of a GOP is divided and edited at a boundary, the transport packet is substituted for said transport packet that does not include any of video information and audio information, thereby overwriting and recording subject data.

However, in the case of each of the data processing apparatus disclosed in JP-A No. 2005-117556 and JP-A No. 2004-336128, because the continuity of audio data is broken at each connection point of audio data, noise comes to generate there. This is resulted from the discontinuity of audio data by preference for AV synchronization.

That is to say, even when an audio packet at an editing position is substituted for a dummy packet described in JP-A No. 2005-117556 or a transport packet having none of video information and voice information described in JP-A No. 2004-336128, the packet is deleted in the decoding process. As a result, discontinuous audio frames are connected. Thus the editing as described above never solves the problem of noise generation to be caused by discontinued data at each connection point.

SUMMARY

The present invention provides a stream editing method for editing data streams, each of which includes at least voice data. In an aspect of the present invention, the editingmethod decodes plural frames positioned before an editing point and assumes at least one frame positioned temporally before the editing point as a fade-out frame to generate edited frames including the fade-out frame, then encodes the edited frames again.

In another aspect of the present invention, the editing method for editing data streams, each of which includes at least voice data, decodes plural frames positioned after an editing point and assumes at least one frame positioned temporally after the editing point as a fade-in frame to generate edited frames including the fade-in frame, then encodes the edited frames again.

In still another aspect of the present invention, the stream editing method for editing data streams, each of which includes at least voice data, decodes plural frames positioned after an editing point and assumes at least one frame positioned temporally before the editing point as a fade-out frame and at least one frame positioned temporally after the editing point as a fade-in frame to generate edited frames including both the fade-out frame and the fade-in frame, then encodes the edited frames again.

The present invention refers to three cases as follows. First case is that a data stream is cut in the middle and terminated there, second case is that the terminated data stream is restarted at the cut position, and third case is that the cut streams are connected again. In above case, the present invention can prevent noise from being generated in spite of the discontinuity of data stream by fading out and terminating, fading in and starting, or fading in and fading out at a connection point.

Another stream editing method according to the present invention edits each data stream by connecting a first editing point to a second editing point positioned temporally after the first editing point in the stream that includes at least MPEG formatted video data. The stream editing method also generates updated sequence information that includes information related to a latest quantizer matrix included before the second editing point, detects the head of an intra-picture or GOP positioned temporally before the second editing point, then inserts the updated sequence information after the head, thereby generating an edited video stream in which the first and second editing points are connected to each other.

The present invention generates and inserts updated sequence information that includes the latest quantizermatrix information included before the second editing point upon connecting a data stream to another at the first and second editing points respectively, thereby the present invention can reproduce the data streams correctly even after the second editing point.

According to the present invention, therefore, it is possible to provide a method and an apparatus for editing data streams preventing noise from being generated to be caused by the discontinuity of audio frames upon editing a data stream.

BRIEF DESCRIPTION OF THE DRAWINGS

FIG. 1 is a block diagram of an editing apparatus in an embodiment of the present invention;
FIGS. 2A, 2B, and 2C are diagrams for describing an audio editing method employed for the editing apparatus in the embodiment of the present invention;
FIG. 3 is a block diagram of a configuration of an editing frame generation unit provided in the editing apparatus in the embodiment of the present invention;
FIG. 4 is a diagram for showing a hierarchical structure of MPEG-2 video data;
FIG. 5 is a diagram for describing the editing method employed for the editing apparatus in the embodiment of the present invention;
FIG. 6 is a diagram for showing the detail of a method for generating updating sequence information shown in FIG. 5; and
FIG. 7 is a diagram for showing the detail of a method for editing audio streams shown in FIG. 5.

DETAILED DESCRIPTION OF THE PREFERRED EMBODIMENTS

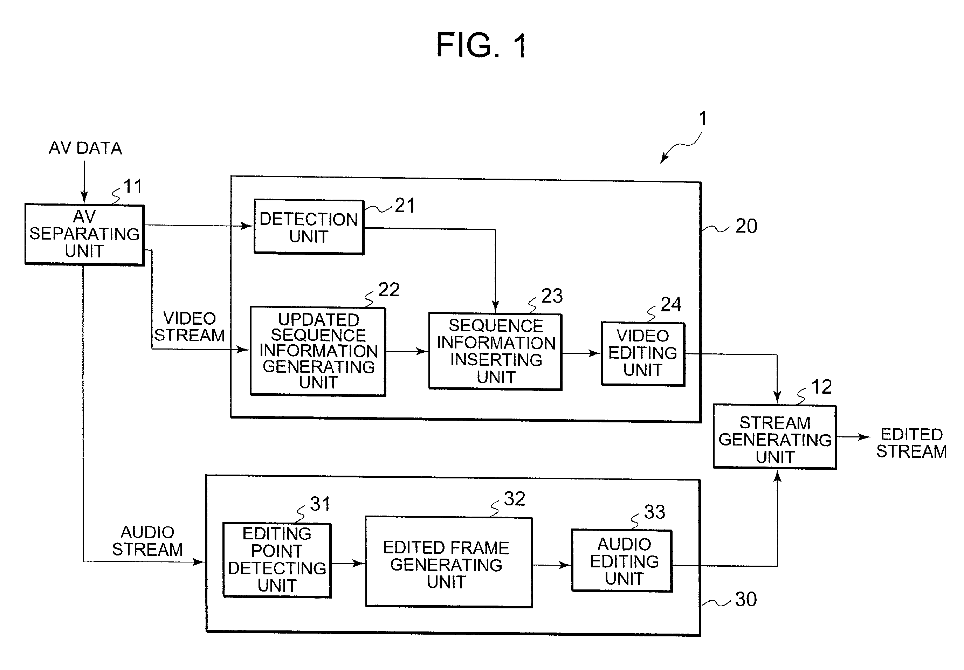

Hereunder, preferred embodiments of the present invention will be described concretely and in detail with reference to the accompanying drawings. FIG. 1 shows a block diagram of an editing apparatus in an embodiment of the present invention. The editing apparatus 1 includes an AV separation unit 11, a video processing unit 20, an audio processing unit 30, and a stream generating unit 12. The AV separation unit inputs AV (Audio Video and Audio Visual) data such as MPEG-2 transport streams (TS: Transport Stream) and separates video packets from audio packets so that video packets are inputted to the video processing unit 20 and audio packets are inputted to the audio processing unit 30.

The video processing unit 20 includes a detection unit 21, an updated sequence information generating unit 22, a sequence information inserting unit 23, and a video editing unit 24. The audio processing unit 30 includes an editing point detecting unit 31, an edited frame generating unit 32, and an audio editing unit 33.

The editing apparatus 1 in this embodiment deletes data between a first editing point (hereunder, to be referred to a point A) and a second editing point (hereunder, to be referred to as a point B) positioned temporally after the point A in AV data and connects the point A to the point B to generate an edited stream to be reproduced without generating any noise and in a quality not to make the user feel any acoustic and visual problems. At first, how to process audio data in the editing apparatus will be described. It is assumed here that, for example, a CPU (Central Processing Unit) executes a computer program to execute the editing processings. In this case, the computer program may be provided by storing on a recording medium. It is also possible to send the computer program to the user through the Internet or the like.

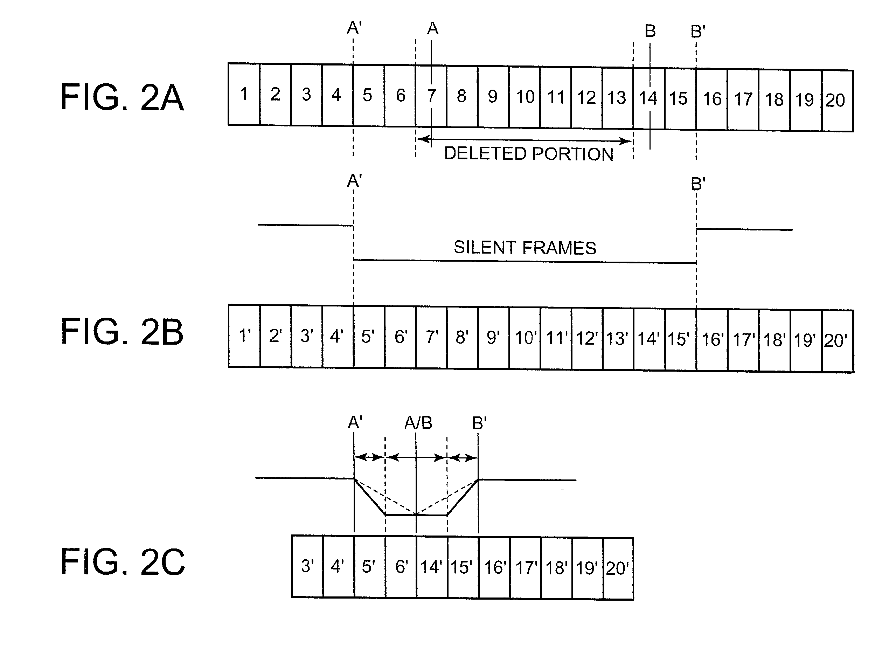

The editing point detecting unit 31 detects audio frames that include points A and B specified from external, for example, the user. FIGS. 2A to 2C show a diagram for describing how to edit audio data using of the editing method of the present invention. Each of video data and audio data has a unit of decoding/reproducing, which is referred to as an access unit. One frame is such an access unit for video data and one audio frame is such an access unit for audio data. And each PES packet header has a PTS (Presentation Time Stamp) and a DTS (Decoding Time Stamp), in each of the PTS and DTS reproducing time information is described as time stamps to denote when the subject access unit of video/audio data should be decoded and when the data should be reproduced in the reference time respectively. Points A and B are specified with time information such as a time PTS for reproducing each access unit. In the following description, it is assumed that the point A is included in the 7th frame and the point B is included in the 14th frame.

The editing point detecting unit 31 detects audio frames that include those having the points A and B respectively. In this case, an audio PTS corresponding to an audio frame is added to the subject packet header only when the leading part of the audio frame is in an audio packet. Moreover, only in the first audio frame if two or more audio frames are included in the audio packet. In other words, a corresponding PTS is not always added to every audio frame. So, the PTS of each audio frame is calculated from the audio PTS and each frame reproducing time.

The edited frame generating unit 32 generates edited frames that include at least one fade-out frame positioned temporally before the point A and at least one fade-in frame positioned temporally after the point B.

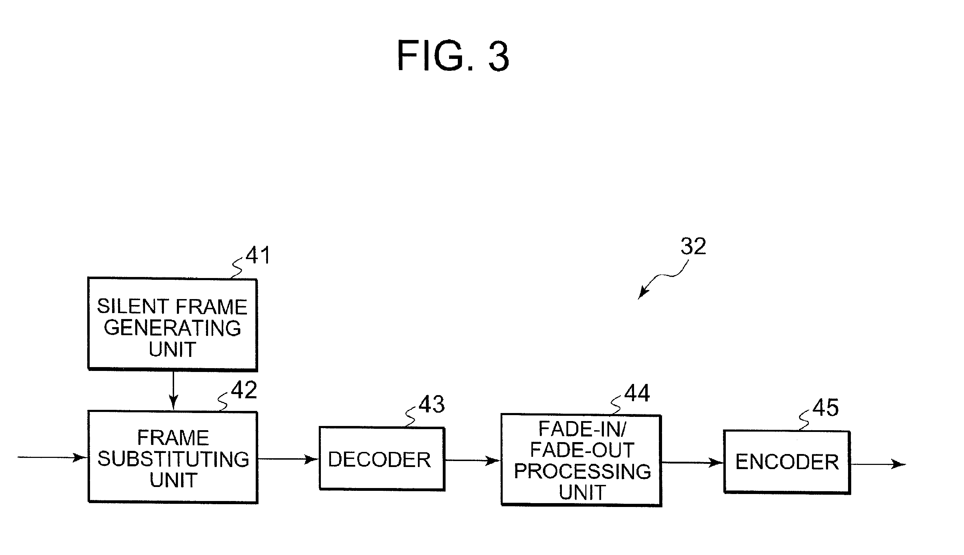

FIG. 3 shows a block diagram of a configuration of the edited frame generating unit 32. The edited frame generating unit 32 includes a silent frame generating unit 41, a frame substituting unit 42, a decoder 43, a fade-out/fade-in processing unit 44, and an encoder 45.

The silent frame generating unit 41 generates silent audio frames in accordance with the recorded audio sampling frequency and the compression format, and encodes the audio frame with use of the encoder 45 or the like. The silent frame generating unit 41 may also generate silent audio streams.

The frame substituting unit 42, when the editing point detecting unit 31 detects audio frames that include the point A and the point B respectively, detects a point positioned several frames before the point A (hereunder, to be referred to as the point A') and a point positioned several frames after the point B (hereunder, to be referred to as the point B'). Then, the frame substituting unit 42 substitutes the frames between the point A' and the point B' for silent frames generated by the silent frame generating unit 41. Here, the point A' should preferably be positioned two or three frames before the point A and the point B' should preferably be positioned two or three frames after the point B. This is because if the edited portions (edited frames) are 4 frames or so in total, a reproduced sound at the said editing point can be prevented from coming into audible bands of 20Hz to 20kHz.

The decoder 43 decodes several surrounding frames including at least those having the points A' to A respectively and several surrounding frames including at least those having the points B' to B respectively in each audio stream in which the frames between points A' to B' as shown in FIG. 2B are substituted for silent frames. The above substitution may also be done in each silent audio stream after such decoding.

The fade-out/fade-in processing unit 44 fades out the sound at the point A' first. The fading-out processing can be executed in one frame or in part of one frame. The fade-out/fade-in processing unit 44 also fades in the sound at the point B'. This fading-in processing can also be executed in one frame or in part of one frame.

The encoder 45 encodes audio frames again after a fade-out/fade-in processing.

In this embodiment of the present invention, how to connect the points A and B to each other is described. However, if the point A is assumed as an ending point of editing and the point B is assumed as a starting point of editing, only the point A or B may be subjected to the connecting processing. In other words, if an editing point is ended at the point A, a frame positioned several frames before the point A is assumed as a fade-out frame and audio frames positioned after the point A are assumed as silent frames. If a point B is assumed as a starting point of editing, a frame positioned several frames after the point B is assumed as a fade-out frame and audio frames positioned before the point B may be substituted for silent frames. In such a case, the fade-in frame, the fade-out frame, and the silent frames can prevent noise generation at editing points.

Return to FIG. 1. The audio editing unit 33, as shown in FIG. 2C, deletes unnecessary data between the points A and B and connects the points A and B to each other. In this case, one of the audio frames (the 7th or 14th frames) including the points A and B respectively is deleted and the other is left over, thereby adjusting so as to reduce the error of the reproducing time in the edited stream. In other words, if both audio frames that include the points A and B respectively are deleted, the deleted portion becomes longer than the time interval between the originally specified points A and B. If both frames that include the points A and B respectively are left over, the deleted portion becomes shorter than the specified time interval. This is why only one of the two audio frames that include the points A and B respectively is deleted.

In the example shown in FIGS. 2A to 2C, the point A is included in the 7th frame and the point B is included in the 14th frame. In this case, for example, as shown in FIG. 2A, the frames from the 7th frame that includes the point A

to the 13th frame, which is one frame before the 14th frame that includes the point B, are deleted. And as shown in FIG. 2C, the 6th frame is connected to the 14th frame. It is also possible here to delete frames from the 8th frame that follows the 7th frame that includes the point A to the 14th frame that includes the point B.

Also in this embodiment, the 5th frame is a fade-in frame and the 6th and the 14th frames become silent frames and the succeeding 15th frame is a fade-out frame. However, the two frames (5th and 6th) may be fade-in frames. And the two frames (14th and 15th) may be fade-out frames. In this case, although there is no silent frames inserting in the stream, each connection point between the 5th and 14th frames prevent noise generation in the audible range in edited frames that include the 4th, 5th, 14th, and 15th frames. This means that it is just required to edit each stream so as not to generate audible noise in several frames before and after a connection point between two editing points.

In the example shown in FIGS. 2A to 2C, all the frames between points A' and B' are substituted for silent frames. However, it is also possible to substitute some frames around each of the points A and B for silent frames. In other words, if attention is paid to the point A, some frames beginning at the frame included the point A are extracted. If attention is paid to the point B, some frames beginning at the frame included the point B are extracted. Then, those extracted frames are substituted for silent frames.

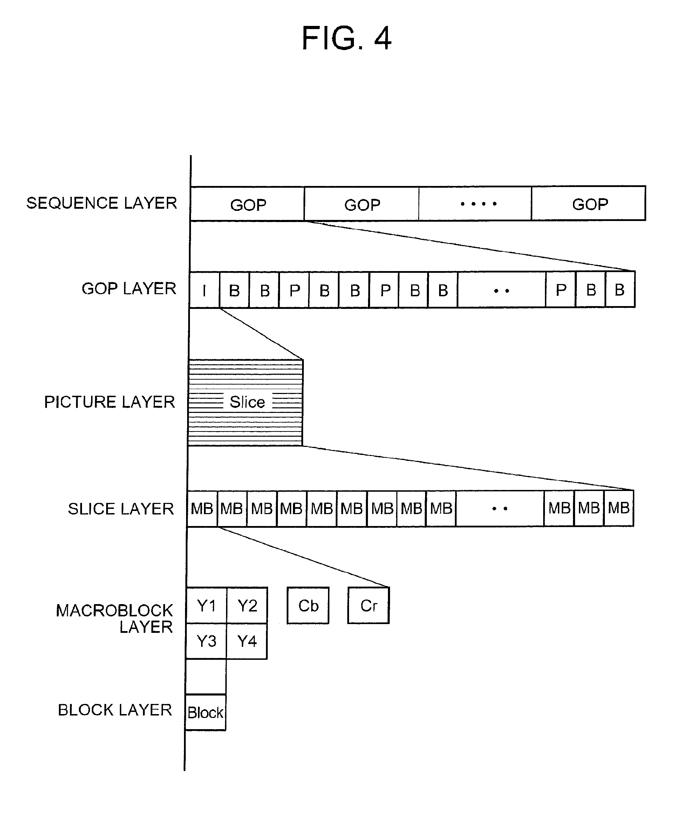

Next, the video editing unit 24 will be described. MPEG-2 video data has a hierarchical structure as shown in FIG. 4. The sequence layer, most significant layer, has series of some GOPs. Each of those GOPs is a set of plural pictures.

A GOP is a combination of three types of pictures (I, P, and B) that are different respectively in encoding algorithm. The I picture is generated through intra-image encoding and no predicting encoding from the previous image is done. In other words, intra-image encoding is done without referring to another image and the I picture has every necessary information for decoding. The P picture is generated through predicting encoding between pictures by referring to the temporally previous I or P picture. Consequently, the P picture requires information of the preceding decoded I or P picture in the subject stream. The B picture is generated using two pictures (past and future pictures) which are I picture or P picture respectively, and executed by predictive encoding from both directions. Upon decoding, the B picture requires information of two preceding and decoded I or P pictures in the subject stream.

The GOPs are classified into OpenGOPs and ClosedGOPs. The OpenGOP requires picture information of a GOP displayed precedingly in a forward reproduction process. On the other hand, the ClosedGOP does not require such picture information of a GOP displayed precedingly. The ClosedGOP begins at an I picture and the OpenGOP begins at a B picture.

A picture is divided into belt-like regions having a height of 16 pixels respectively. Those divided regions are referred to as slices. In the MPEG-2, a 32-bit start code is given to the head of each layer arranged from a sequence layer to a slice layer to enable fast feeding, rewinding, and error recovery. A slice consists of more than one macro block. A macro block corresponds to a region of 16 x 16 pixels and each region consists of 6 blocks that are 4 luminance blocks (Y) of 8 x 8 pixels respectively and two color difference blocks (Cb and Cr). A luminance blocks or color difference blocks are converted to frequency components through a discrete cosine transformation (DCT) process, then sorted in an ascending order of low frequency DCT coefficients.

A stream is divided into those 6 hierarchical layers before it is transmitted. Here, an encoded data transmission sequence will be described. At first, the sequence layer, which is the first layer, has an SHC (Sequence Header Code), which is a starting synchronization code of the sequence layer. The sequence layer has parameters of a screen (frames) group having a series of same attributes that are specified for reproducing video information as images. The parameters are related to screen sizes for reproduced pictures, that is, HSV (Horizontal Size Value), VSV (Vertical Size Value), and ARI (Aspect Ratio Information). The HSV uses lower 12 bits related to the number of horizontal pixels of an image and the VSV uses lower 12 bits related to the number of vertical lines of the image.

Furthermore, parameters BRV and VBSV are specified. The BRV (Bit Rate Value) is a parameter related to the bit rate of the video information and the VBSV (VBV Buffer Size Value) is related to a capacity of a buffer used for decoding video information. The BRV uses the lower 18 bits of the bit rate to limit the number of bits to be generated and the VBSV uses the lower 10 bits of a vale for determining a size (VBV) of a generation code quantity virtual buffer.

Furthermore, the following quantizer matrix values are specified for DCT (Discrete Cosine Transform) (image expansion); LIQM (Load Intra Quantizer Matrix), IQM (Intra Quantizer Matrix), LNIQM (Load Intra Quantizer Matrix), NIQM (Non Intra Quantizer Matrix). The LIQM denotes existence of intra MB quantizer matrix data. The IQM denotes a value of intra MB quantizer matrix. The LNIQM denotes existence of non-intra MB quantizer matrix data. The NIQM denotes a value of non-intra MB quantizer matrix. In this specification, these LIQM, IQM, LNIQM, and NIQM are referred to as quantizer matrix information items.

The next GOP layer has parameters GSC (Group Start Code), TC (Time Code), CG (Closed GOP), and BL (Broken Link). The GSC is a GOP starting synchronization code. The TC is a code denoting a time count started at the head of a sequence. The CG is a flag denoting that an image in a GOP can be reproduced independently of other GOPs. The BL is a flag denoting that the first B picture in a GOP cannot be reproduced correctly due to such a processing as editing.

Then, the picture layer has a parameter that specifies one screen (frame) in a process for reproducing video information as images. Besides the sequence layer, this matrix layer is also specified by quantizer matrix information items LIQM, IQM, LNIQM, and NIQM that can be described as well as in the sequence layer.

The slice layer includes common information specified for sliced small screens of one screen. The next macro block layer specifies pixel blocks (macro blocks) obtained by dividing one screen into predetermined sized blocks, each of which is a unit for encoding. For example, this pixel block includes such parameters as a motion vector value. The macro block layer uses parameters MBT, QSC, etc. The MBT (Macroblock Type) specifies a macro block encoding mode. The QSC (Quantizer Scale Code) specifies a size of a macroblock quantizer step. The macroblock layer also uses parameters MHC and MVC. The MHC (Motion Horizontal Code) and the MVC (Motion Vertical Code) are coding values related to motion vectors with respect to the previous macro block. The last block layer stores transformation coefficient itself.

At this time, editing a video stream causes noise generation in images if a difference is found between the edited sequence information after a connection point and the said sequence information before the connection point, and the noise is continued to be generated until the sequence information is updated to be corrected. This has been a problem.

To solve this problem, JP-A No. 2005-33382 discloses an editing apparatus for enabling stable reproducing of data upon trimming of a middle part of MPEG stream data stored on a random accessible recording medium. The MPEG-2 stream is required to include system information such as a bit rate value, an image size upon decoding, a compression method, etc. that are all indispensable for decoding/reproducing a series of the follow-on MPEG data.

According to this technique disclosed in JP-A No. 2005-33382, upon trimming of an MPEG-2 PS stream, that is, deleting of a middle part of the stream, system information included data is generated and added just before the succeeding data that begins at the end of the above deletion so as to decode/reproduce the series of sequences.

As described above, the sequence layer records quantizer matrix information. And the picture layer also records quantizer matrix information. Those quantization matrix information items are indispensable for proper decoding of video data. Each information item (hereinafter, to be referred to as sequence information) included in the sequence layer is updated entirely when a sequence header code (SHC) of the sequence layer appears. On the other hand, the quantizer matrix information of the picture layer is just added as needed. Hereinafter, the quantizer matrix information added to this picture layer will be referred to as updated quantizer matrix information.

As described above, the editing method disclosed in JP-A No. 2005-33382 searches the information of the sequence layer positioned just before the point B and adds the subj ect sequence information to the searched the information of the sequence, thereby reproducing video data after the point B. If there is updated quantizer matrix information in the picture layer provided between the sequence layer and the point B at this time, the use of the updated quantizer information is indispensable to reproduce the video data after the point B.

In other words, in JP-A No. 2005-33382, no consideration is taken into such updated quantizer matrix information, so that the sequence information before a connection point at the time of editing cannot be correct for using as the sequence information after the connection point sometimes. This makes it impossible to solve a problem that the state of noise generation is continued to correct an error to be caused by an imperfect stream.

The video editing unit in this embodiment, if there is updated quantizer matrix information upon adding sequence information before a point B, updates the subject quantizer matrix information with updated quantizer matrix information, then adds the updated sequence information before the point B. Consequently, video data after the point B is also reproduced correctly.

Return to FIG. 1. The detection unit 21 detects a video PTS at an editing point, as well as an insert position of updating sequence to be described later. In the editing point video PTS detection, the detection unit 21 detects a video PTS at each of the points A and B described above. As the updating sequence information, the detection unit 21 searches an insert position set temporally before the point B and nearest to the point B. The insert position may be an I picture before the point B and nearest to the point B, or the head of a GOP. In other words, the detection unit 21 searches a necessary picture for reproducing frames after the point B. In the editing processing of the video editing unit 24 to be described later, pictures after the subject one are left over. Pictures after the point A and before the point B are not reproduced.

The updated sequence information generating unit 22 also includes a sequence information collection unit (not shown) and a sequence information updating unit (not shown). The sequence information collection unit collects sequence information to obtain the quantizer matrix information of the sequence layer and the sequence information updating unit rewrites the quantizermatrix information of the sequence layer into updated quantizer matrix information. The sequence information collection unit detects a sequence start code SHC, and extracts and stores the sequence information that is the information of the sequence layer as is. The sequence information collection unit also overwrites the sequence information every time the unit detects a sequence start code.

The updated sequence information creating unit extracts updated quantizer matrix information items (LIQM, IQM, LNIQM, and NIQM) included in the sequence layer and in the picture layer that follows the GOP layer if they exist. The updated sequence information creating unit also rewrites the quantizer matrix information of the stored latest sequence information with the updated quantizer matrix information and keeps the information as updated sequence information.

The sequence information inserting unit 23, upon receiving an insertion position from the detection unit 21, inserts the sequence information updated by the updated sequence information generating unit 22 in the specified insertion position. In this embodiment, the sequence information is updated by taking consideration not only to the sequence information, but also to the updated quantizer matrix information in the picture layer, so that the frames after the point B can also be reproduced correctly.

The video editing unit 24 connects the point A to the point B and deletes unnecessary streams between those points A and B. This means that streams positioned from the point A to the point B are not deleted, but pictures positioned from the point A to the insert position are deleted.

The stream generating unit 12 receives an edited video stream from the video editing unit 24 and an edited audio stream from the audio editing unit 33 to generate an edited AV stream (edited stream).

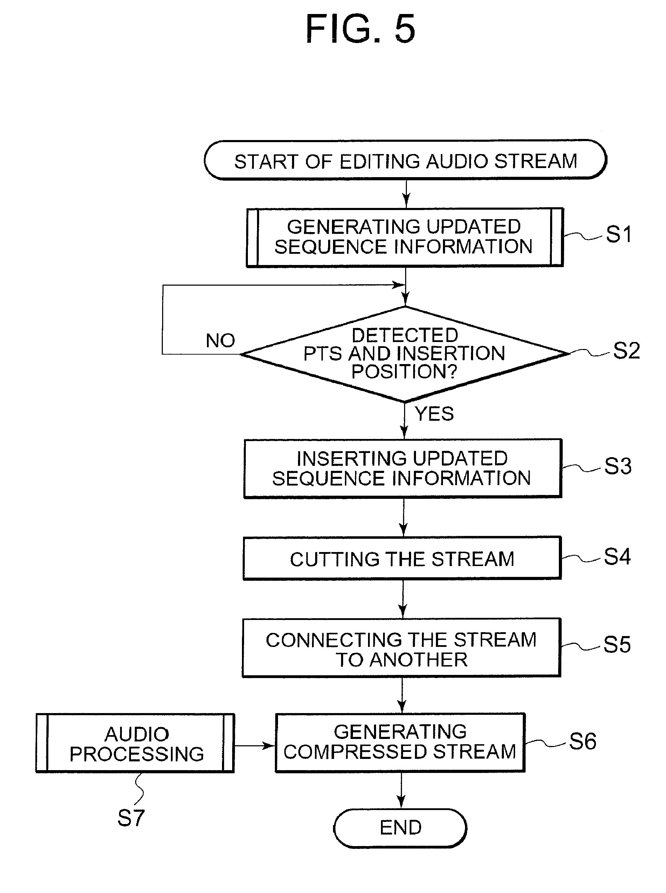

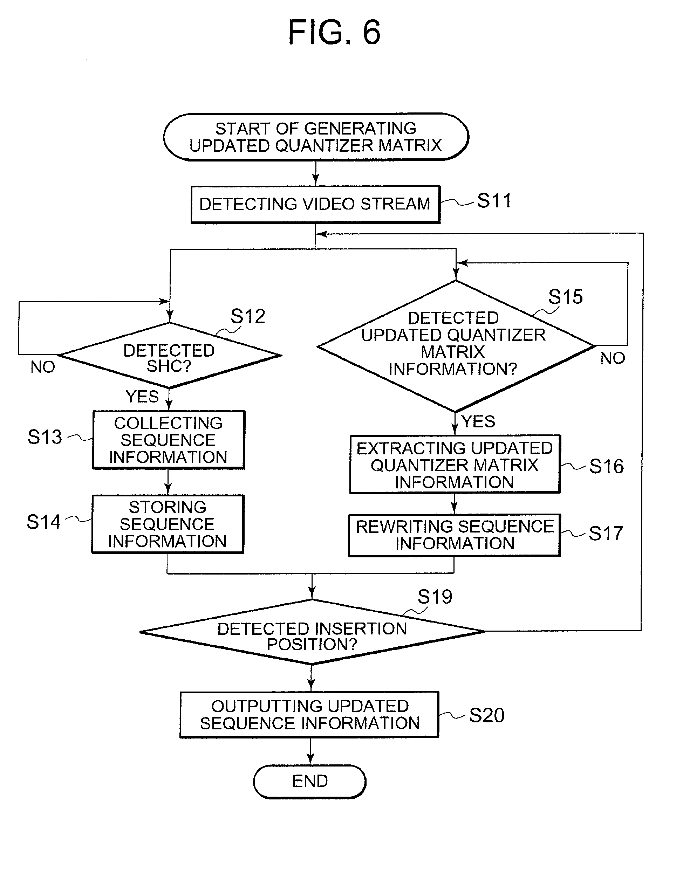

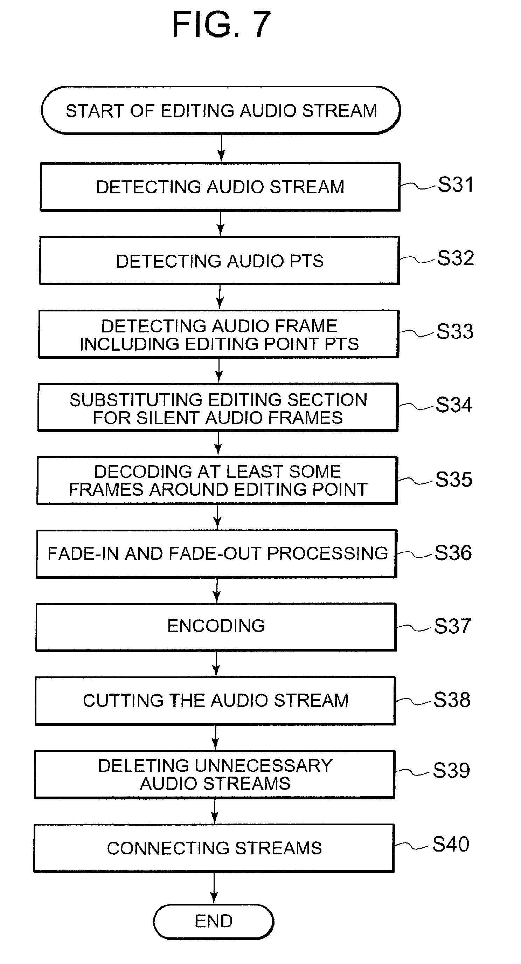

Next, the operation of the stream editing apparatus in this embodiment will be described. FIGS. 5 through 7 show diagrams for describing how the stream editing apparatus edits a stream. FIG. 5 is a diagram for describing the operation of the entire stream editing apparatus. FIG. 6 is a diagram for describing the details of how updated sequence information is generated. FIG. 7 is a diagram for describing the detail of how an audio stream is edited.

The editing processings of a video stream in steps S1 to S5 shown in FIG. 5 and the editing processing of an audio stream in step S7 are executed in parallel. In the process for editing a video stream, the processing in step S1 for generating updated sequence information and the processing in step S2 for detecting a video PTS and an insert position are executed in parallel.

The updated sequence information generating unit 22, upon receiving a video stream from the AV separating unit 11, generates updated sequence information (step S1). As described above, the updated sequence information is generated from the sequence information of the sequence layer and the updated quantizer matrix information of the picture layer. In this embodiment, the updated sequence information generating unit 22, upon receiving a video stream, generates updated sequence information regardless of the editing points A and B. It is just required here that the updated sequence information before the point B can be generated. For example, the updated sequence information generating unit 22 may generate the latest updated sequence information positioned before the point B after receiving the PTS information at the point B from the detection unit 21.

The detection unit 21 reads out a video PTS added to the subject packet header while generating updated sequence information, then detects an inser position (step S2). At this time, there is a case in which no video PTSs are found for the points A and B specified from external. In such a case, the detection unit 21 detects the nearest PTSs positioned before the points A and B respectively and identifies a picture that becomes a PTS matching with each of the points A and B from the picture reproducing time.

Upon detecting the video PTS of each of the points A and B and identifying the subject picture, the detection unit 21 searches the I picture nearest to the point B or the first picture (I or B picture) of the subject GOP. Hereunder, this picture will be referred to an insertion picture.

Upon detecting an insertion picture, the detection unit 21 inserts updated sequence information in the specified insert position (step S3). Because the updated sequence information is information of the sequence layer, the updated sequence information is inserted together with the GOP layer before the picture layer of the inserted picture. As described above, four information items GSC, TC, CG, and BL are specified for the GOP layer. Those information items are generated by the sequence information inserting unit 23. And the updated sequence information and the generated GOP layer are inserted before the insertion picture.

Then, the video editing unit 24 receives a video stream in which updated sequence information is inserted. The video editing unit 24 then connects the point A to the point B (steps S4 and S5). Concretely, the video editing unit 24 disconnects the subject stream before the inserted picture, then connects the point A to the point B.

Next, a processing in step S1 for generating updated sequence information will be described in detail. As shown in FIG. 6, upon detecting a video stream (step S11), the video editing unit 24 collects/stores sequence information (step S12 to S14) and obtains/rewrites updated quantizer matrix information (steps S15 to S17) in parallel.

In steps S15 to S17 for collecting/storing sequence information, the video editing unit 24 searches a sequence start code SHC (step S12). Upon detecting the sequence start code SHC, the video editing unit 24 extracts the sequence layer (step S13), then stores the layer in a memory (step S14). After this, the video editing unit 24 repeats the processings in and after step S12 until the detection unit 21 detects an insert position (insertion picture) (step S19).

On the other hand, in the processings for obtaining/rewriting updated quantizer matrix information, the video editing unit 24 searches updated quantizer matrix information in the picture layer (step S15). Upon detecting the information, the video editing unit 24 extracts the detected information (step S16), then updates the quantizer matrix information of the sequence information stored in the memory in step S14 according to this updated quantizer matrix information. Then, the video editing unit 24 repeats the processings in and after step S15 until the detection unit 21 detects an insertion position (step S19).

Upon detecting the insert position (step S19: Yes), the video editing unit 24 outputs the sequence information stored in the memory to the sequence information inserting unit 23 as updated sequence information.

At this time, the updated sequence information generating unit 22 may store the sequence information in step S14 or output the updated sequence information as needed when the sequence information is rewritten in step S17 instead of outputting updated sequence information when an insert position is detected. The sequence information inserting unit 23 is just required to insert the latest updated sequence information received from the updated sequence information generating unit 22 before the inserted picture upon receiving an insert position from the detection unit 21.

Next, a description will be made for an audio editing processing in step S7 executed in parallel to the video editing processing described above. As shown in FIG. 7, the editing point detecting unit 31, upon detecting an audio stream (step S31), detects an audio PTS as an audio reproducing time first (step S32).

A PTS is not always added to every audio frame in every audio stream. Thus the editing point detecting unit 31 detects the (n-1) th audio PTS that satisfies the following condition if it is assumed that the audio PTS added to the (n-1) th audio frame is PTS_A (n-1) and the audio PTS added to the (n) th audio frame is PTS_A (n).

$$PTS\_A\ (n-1) < video\ PTS\ at\ point\ A < PTS\_A\ (n)$$

The PTS at the point A can be received from, for example, the detection unit 21.

At this time, there are plural audio frames between the audio frame corresponding to the (n-1)th audio PTS and the audio frame corresponding to the (n) th audio PTS. Thus, the editing point detecting unit 31 searches an audio frame that includes a video connection point PTS by taking into consideration the reproducing time of each audio frame (step S33). If Tm-1 and Tm are assumed for the times required for reproducing from the audio frame corresponding to the (n-1) th audio PTS to the (m-1) th and (m)th audio frames, the editing point detecting unit 31 searches (m) that satisfies PTS_A (n-1) + Tm - 1 < PTS at point A < PTS_A (n-1) + Tm. In other words, the editing point detecting unit 31 can detect the (m-1)th audio frame from the audio frame corresponding to the (n-1) th audio PTS as audio frame including the point A. Similarly, the editing point detecting unit 31 can also detect audio frames including the point B.

After that, the edited frame generating unit 32 executes the processings in steps S34 to S37. At first, the edited frame generating unit 32 substitutes frames in an editing section in which the points A and B are included and consisting of some frames before and after each of the points A and B (,that is, between points A' and B' shown in FIGS. 2A to 2C) for silent frames generated by the silent frame generating unit 41 (step S34). Then, the edited frame generating unit 32 decodes the frames including the section between points A and A' and the section between the points B and B' respectively (step S35). At this time, the edited frame generating unit 32 may decode the frames in the whole editing section.

And the edited frame generating unit 32 fades out the point A' with one frame and keeps the frames up to one frame before the point B' as substituted silent frames, then fades in the sound at the point B' with said one frame (step S36). The edited frame generating unit 32 may use more than two frames or less than one frame for these fade-in and fade-out processings. In step S34 in this embodiment, frames are substituted for encoded silent frames. However, the decoded frames from the faded-out one to the faded-in one may be substituted for a silent audio stream.

Then, the edited frame generating unit 32 encodes the fade-in and fade-out processed streams (step S37) and outputs the encoded streams to the audio editing unit 33. The audio editing unit 33 then disconnects the audio stream at frames that include the points A and B respectively (step S38) and deletes unnecessary audio streams (step S39). Here, when an audio stream is disconnected, one frame that includes one of the two editing points is deleted and the other frame that includes another editing point is left over, thereby the editing time is adjusted. Finally, the streams are connected and the audio stream editing process is ended (step S40).

In this embodiment, audio frames before and after a connection point in an editing process are substituted for silent frames, thereby a necessary audio reproducing time is kept on while noise to be caused by rapid changes of sounds at connection points can be prevented. In other words, because the frames in an editing section consist of a fade-out frame, silent frames, and a fade-in frame, it is possible to prevent noise to be caused by rapid changes of sounds, etc. at the time of audio reproducing after connecting frames.

Furthermore, because updated information of a target sequence in a GOP and in the header of a picture such as an MPEG Q scale matrix, etc. is detected at the time of editing to reconfigure the sequence information, correct sequence information can be obtained after each connection point, thereby image noise can be prevented. Therefore, edited audio and video data can be reproduced in high quality, so that the user can enjoy the reproduced audio and video without feeling a sense of discomfort visually and aurally.

Although the invention has been described above in connection with several preferred embodiments thereof, it will be appreciated by those skilled in the art that those embodiments are provided solely for illustrating the invention, and should not be rekied upon to construe the appended claims in a limiting sense.

In one embodiment the

editing point detecting unit detects editing points in audio frames. The edited frame generating unit generates edited frames. The silent frame generating unit generates silent audio frames. The frame substituting unit detects a point. The fade-out/fade-in processing unit fades out/in the sound.

The detection unit detects a video PTS at an editing point. The updated sequence information generating unit detects a sequence start code, and extracts and stores the sequence information. The updated sequence information creating unit extracts updated quantizer matrix information items. The sequence information inserting unit inserts the sequence information. The video editing unit connects the editing points. The stream generation unit generate an edited AV stream based on received video stream and audio stream.

**Claims**

1. A apparatus of editing a stream data that includes at least voice data, comprising:

    a decoder decoding a plurality of frames before an editing point;
    a frame editing unit assuming at least one faded-out frame positioned before said editing point as a fade-out frame, and thereby generating an edited frame that includes said fade-out frame; and
    an encoder encoding said edited frame.

2. The apparatus according to claim 1, wherein
    said decoder decoding a plurality of frames after said editing point; and
    said frame editing unit assuming at least one faded-in frame positioned after said editing point as a fade-in frame, and thereby generating an edited frame that includes said fade-in frame.

3. The apparatus according to claim 1 or 2,
    wherein said edited frame editing unit inserts more than one silent frame between said fade-out frame and said fade-in frame to generate said edited frame.

4. The apparatus according to one of claims 1 to 3,
    wherein said editing point is any of a first editing point specified from external and a second editing point placed after said first editing point;
    wherein said edited frame editing unit assumes a frame positioned at least one frame before said frame that includes said first editing point as a fade-out frame and a frame positioned at least one frame after said frame that includes said second editing point as a fade-in frame, then substitutes a frame between said fade-out frame and said fade-in frame for a silent frame to generate said edited frame.

5. The apparatus according to one of claims 1 to 4, further comprising:

    an updated information generation unit for generating sequence information that includes information related to a latest quantizer matrix appearing before said second editing point;
    an updated information insertion unit for detecting at least one of an infra-picture and a head of GOP positioned before said second editing point and inserting said updated sequence information in a detected position.

6. The stream editing apparatus according to claim 5,
    wherein said apparatus further includes an edited data stream generation unit for generating an edited data stream from said edited voice stream and said edited video stream that are encoded by said encoder respectively.

7. The stream editing unit according to claim 5 or 6,
    wherein said updated information generation unit generates said updated sequence information by referring to information of both sequence layer and picture layer.

8. The stream editing apparatus according to one of claims 5 to 7,
    wherein said updated information generation unit extracts sequence information that is information related to at least a quantizer matrix included in a latest sequence layer among those added before said second editing point, then extracting information related to an updated quantizer matrix from said picture layer between said latest sequence layer and said second editing point if said information exists there, thereby rewriting said sequence information.

**9.** A apparatus of editing a stream data by connecting a first editing point to a second editing point, comprising:

an updated information generation unit generating sequence information that includes information related to a latest quantizer matrix appearing before said second editing point;

an updated information insertion unit detecting at least one of an intra-picture and a head of GOP positioned before said second editing point and inserting said sequence information in a detected position.

**10.** The apparatus according to claim 9,
wherein said apparatus further comprising:

an edited data stream generation unit for generating an edited data stream from said edited voice stream and said edited video stream that are encoded by said encoder respectively.

**11.** The apparatus according to claim 9 or 10,
wherein said updated information generation unit generates said sequence information by referring to information of both sequence layer and picture layer.

**12.** The apparatus according to one of claims 9 to 11,
wherein said updated information generation unit extracts sequence information that is information related to at least a quantizer matrix included in a latest sequence layer among those added before said second editing point, then extracting information related to an updated quantizer matrix from said picture layer between said latest sequence layer and said second editing point if said information exists there, thereby rewriting said sequence information.

**13.** The apparatus according to one of claims 9 to 12, further comprising:

a decoder decoding a plurality of frames before an editing point;
a frame editing unit assuming at least one faded-out frame positioned before said editing point as a fade-out frame, and generating an edited frame that includes said fade-out frame; and
an encoder encoding said edited frame.

**14.** The apparatus according to claim 13, wherein
said decoder decoding a plurality of frames after said editing point; and
said frame editing unit assuming at least one faded-in frame positioned after said editing point as a fade-in frame, and thereby generating an edited frame that includes said fade-in frame.

**15.** The apparatus according to claim 13 or 14,
wherein said edited frame editing unit inserts more than one silent frame between said fade-out frame and said fade-in frame to generate said edited frame.

**16.** The apparatus according to one of claims 13 to 15,
wherein said editing point is any of a first editing point specified from external and a second editing point placed after said first editing point;
wherein said edited frame editing unit assumes a frame positioned at least one frame before said frame that includes said first editing point as a fade-out frame and a frame positioned temporally at least one frame after said frame that includes said second editing point as a fade-in frame, then substitutes a frame between said fade-out frame and said fade-in frame for a silent frame to generate said edited frame.

**17.** An apparatus of editing stream data including a plurality of GOPs (Groups Of Pictures), each accompanied with a sequence header, by deleting a portion of the stream data, the portion of the stream data being defined by first and second editing points, comprising:

an updated information generation unit for producing sequence information; and
an updated information insertion unit for detecting a quantizer matrix contained in the portion of the stream data to said produced sequence information; and inserting said produced sequence information prior to the second editing point said produced sequence information, when a first quantizer matrix appears in the portion of the stream data between the second editing point and the sequence header that is the nearest to the second editing point and contains a second quantize matrix, in response to the first quantize matrix.

# FIG. 1

EP 1 883 072 A2

FIG. 2A

FIG. 2B

FIG. 2C

# FIG. 3

EP 1 883 072 A2

# FIG. 4

# FIG. 5

```
                 ┌─────────────────────────────┐
                 │  START OF EDITING AUDIO STREAM  │
                 └─────────────────────────────┘
                              │
                              ▼
              ┌──────────────────────────────┐
              ║   GENERATING UPDATED         ║      S1
              ║   SEQUENCE INFORMATION       ║
              └──────────────────────────────┘
                              │
                              ▼
                        ╱─────────╲
              NO       ╱  DETECTED  ╲
         ┌────────────◄  PTS AND INSERTION  ►─── S2
         │             ╲  POSITION?  ╱
         │              ╲─────────╱
         │                   │ YES
         │                   ▼
         │         ┌──────────────────────┐
         │         │   INSERTING UPDATED   │       S3
         │         │   SEQUENCE INFORMATION │
         │         └──────────────────────┘
         │                   │
         │                   ▼
         │         ┌──────────────────────┐
         │         │   CUTTING THE STREAM  │       S4
         │         └──────────────────────┘
         │                   │
         │                   ▼
         │         ┌──────────────────────┐
         │         │  CONNECTING THE STREAM │      S5
         │         │      TO ANOTHER        │
         │         └──────────────────────┘
         │                   │
  ┌───────────┐              ▼
  ║  AUDIO    ║    ┌──────────────────────┐
  ║PROCESSING ║───►│    GENERATING          │      S6
  └───────────┘    │  COMPRESSED STREAM     │
       S7          └──────────────────────┘
                              │
                              ▼
                        ┌─────────┐
                        │   END    │
                        └─────────┘
```

15

# FIG. 6

```
        START OF GENERATING
      UPDATED QUANTIZER MATRIX

        DETECTING VIDEO STREAM ──S11
```

DETECTED
SHC?                           S12

NO

YES

S13 ── COLLECTING
        SEQUENCE
        INFORMATION

S14 ── STORING
        SEQUENCE
        INFORMATION

DETECTED
UPDATED QUANTIZER
MATRIX
INFORMATION?              S15

NO

YES

EXTRACTING UPDATED
QUANTIZER MATRIX ──S16
INFORMATION

REWRITING SEQUENCE ──S17
INFORMATION

DETECTED INSERTION
POSITION?                    S19

OUTPUTTING UPDATED ──S20
SEQUENCE INFORMATION

END

# FIG. 7

START OF EDITING AUDIO STREAM

DETECTING AUDIO STREAM — S31

DETECTING AUDIO PTS — S32

DETECTING AUDIO FRAME
INCLUDING EDITING POINT PTS — S33

SUBSTITUTING EDITING SECTION
FOR SILENT AUDIO FRAMES — S34

DECODING AT LEAST SOME
FRAMES AROUND EDITING POINT — S35

FADE-IN AND FADE-OUT PROCESSING — S36

ENCODING — S37

CUTTING THE AUDIO STREAM — S38

DELETING UNNECESSARY
AUDIO STREAMS — S39

CONNECTING STREAMS — S40

END

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005117556 A
- JP 2004336128 A

- JP 2005033382 A